Europäisches Patentamt

European Patent Office

Office européen des brevets

(19)

(11) **EP 1 347 460 A1**

(12) **EUROPEAN PATENT APPLICATION**

(43) Date of publication:
**24.09.2003 Bulletin 2003/39**

(51) Int Cl.7: **G21K 4/00**

(21) Application number: **03100314.8**

(22) Date of filing: **13.02.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **08.03.2002 EP 02100235**

(71) Applicant: **AGFA-GEVAERT
2640 Mortsel (BE)**

(72) Inventors:
• **Joly, Ludo
  2640 Mortsel (BE)**
• **Van den Bergh, Rudi
  B-2640 Mortsel (BE)**
• **Leblans, Paul
  B-2640 Mortsel (BE)**

(54) **A binderless storage phosphor screen having voids partially filled**

(57)    A binderless stimulable phosphor screen comprising a vapour deposited storage phosphor layer on a support and a protective layer wherein the vapour deposited phosphor is needle shaped with voids between the needles, wherein the voids are partially filled with a polymeric compound.

**Description**

FIELD OF THE INVENTION

The present invention relates to a binderless storage phosphor screen with vapour deposited phosphors.

BACKGROUND OF THE INVENTION

A well known use of storage phosphors is in the production of X-ray images. In US-A 3,859,527 a method for producing X-ray images with a photostimulable phosphor, which are incorporated in a panel is disclosed. The panel is exposed to incident pattern-wise modulated X-ray beam and as a result thereof the phosphor temporarily stores energy contained in the X-ray radiation pattern. At some interval after the exposure, a beam of visible or infra-red light scans the panel to stimulate the release of stored energy as light that is detected and converted to sequential electrical signals which (are) be processed to produce a visible image. For this purpose, the phosphor should store as much as possible of the incident X-ray energy and emit as little as possible of the stored energy until stimulated by the scanning beam. This is called "digital radiography" or "computed radiography".

Since in the above described X-ray recording systems the X-ray conversion screens are used repeatedly, it is important to provide them with an adequate topcoat for protecting the phosphor containing layer from mechanical and chemical damage. This is particularly important for photostimulable radiographic screens where screens are often transported in a scanning module - wherein the stimulation of the stored energy takes place - while not being encased in a cassette but is used and handled as such without protective encasing.

The image quality that is produced by any radiographic system using phosphor screen thus also in a digital radiographic system, depends largely on the construction of the phosphor screen. Generally, the thinner a phosphor screen at a given amount of absorption of X-rays, the better the image quality will be. This means that the lower the ratio of binder to phosphor of a phosphor screen, the better the image quality, attainable with that screen, will be. Optimum sharpness can thus be obtained when screens without any binder are used. Such screens can be produced, e.g., by physical vapour deposition, which may be thermal vapour deposition, sputtering, electron beam deposition or other of phosphor material on a substrate. However, this production method can not be used to produce high quality screens with every arbitrary phosphor available. The mentioned production method leads to the best results when phosphor crystals with high crystal symmetry and simple chemical composition are used.

The use of alkali metal halide phosphors in storage screens or panels is well known in the art of storage phosphor radiology and the high crystal symmetry of these phosphors makes it possible to provide structured,as well as binderless screens.

It has been disclosed that when binderless screens with an alkali halide phosphor are produced it is beneficial to have the phosphor crystal deposited as some kind of piles, needles, tiles, etc. to increase the image quality than can be obtained when using such a screen. In, e.g., **US-A-4 769 549** it is disclosed that the image quality of a binderless phosphor screen can be improved when the phosphor layer has a block structure shaped in fine pillars. In e.g. **US-A-5 055 681** a storage phosphor screen comprising an alkali halide phosphor in a pile-like structure is disclosed. Also in **EP-A-1 113 458** a phosphor panel with a vapour deposited CsBr:Eu phosphor layer wherein the phosphor is present as fine needles separated by voids is disclosed for optimising the image quality.

Unfortunately such needle shaped phosphors are quite brittle and the phosphor panels are prone to physical damage after only a few cycles in the scanning apparatus. It has been proposed to strengthen the screens or panels by applying a protective layer on top of the vapour deposited phosphor layer. Such a protective overcoat is described in published **EP-A-392 474**. Also the use of radiation curable coating to form a protective top layer in a X-ray conversion screen is described e.g. in **EP-A-209 358** and **JP-A-86 176 900** and **US-A-4 893 021**. For example, the protective layer comprises a UV cured resin composition formed by monomers and/or prepolymers that are polymerised by free-radical polymerisation with the aid of a photoinitiator. The monomeric products are preferably solvents for the prepolymers used.

In co-pending EP-Application No. 01000694, filed December 3, 2001, a binderless stimulable phosphor screen is disclosed having a support and a vapour deposited phosphor layer and a protective layer on top of said phosphor layer characterised in that said vapour deposited phosphor is needle-shaped and said phosphor needles have a length, L and voids between them and wherein said protective layer fills said void for at most 0.10 times L. By doing so the strength of the panel is increased. In US-A-4 947 046 it is disclosed that the voids between needle phosphor can be filled with colorants, dyes and/or pigments, thus enhancing the image quality.

Although all screens disclosed in this prior art can yield X-ray images with good quality, there is still a need for storage phosphor screens with increased physical strength that can withstand the wear and the tear of transporting.

OBJECTS AND SUMMARY OF THE INVENTION

It is an object of the invention to provide a binderless stimulable phosphor screen useful in an X-ray recording system with a strong protective layer and that can be transported easily through a scanning module without causing jamming.

The above mentioned object is realised by providing a stimulable phosphor screen having the specific features defined in claim 1. Specific features for preferred embodiments of the invention are disclosed in the dependent claims.

Further advantages and embodiments of the present invention will become apparent from the following description.

DETAILED DESCRIPTION OF THE INVENTION

By "vapour deposited phosphor" it is, throughout this text, meant a phosphor that is deposited on a substrate by any method selected from the group consisting of thermal vapour deposition, chemical vapour deposition, electron beam deposition, radio frequency deposition and pulsed laser deposition. This vapour deposition is preferably carried out under conditions as described in EP-A-1 113 458.

When vapour deposited phosphor layers contain phosphor needles separated by voids as disclosed in, e.g., the above mentioned EP-A-1 113 458, the phosphor layer is, as said above, quite sensitive with regard to mechanical impact. It was found now that the voids between the needles could easily be filled with a polymer and that when the voids were partially filled with a polymeric compound, the mechanical strength of the phosphor layer is greatly enhanced and a phosphor screen with the good sharpness associated with the needle shape of the phosphor and the good mechanical properties associated with phosphor layers containing phosphor particles in a binder are both realised in the same panel. Preferably, the voids are filled over a length of at least 5 $\mu$m. More preferably, the voids are filled over a length of at least 10 $\mu$m. Most preferably, the voids are filled over a length of 15 $\mu$m.

Polymers used in order to fill the voids can be any polymer or polymer mixture known as a binder in the art of making phosphor panels. Useful polymers for use in a phosphor panel of the present invention are preferably selected from the group consisting of vinyl resins, polyesters and polyurethane resins. A first preferred class of polymers to be used as binders are the vinyl resins. According to the Whittington's dictionary of plastics this class includes all resins and polymers made from monomers containing the vinyl group $CH_2$=CH-. Examples of such ethylenic monomers include acrylates, methacrylates, vinyl esters, olefins, styrenes, crotonic acid esters, itaconic acid diesters, maleic acid diesters, fumaric acid diesters, acrylamides, acryl compounds, vinyl ethers, vinyl ketones, vinyl heterocyclic compounds, glycidyl esters, unsaturated nitriles, polyfunctional monomers, and various unsaturated acids. A further class of useful polymers are polyesters with Tg $\leq$ 0. This class comprises all polymers in which the main polymer backbones are formed by the esterification condensation of polyfunctional alcohols and acids. Also hydrogenated styrene-diene block copolymers, having a saturated rubber block, as rubbery and/or elastomeric polymers can be for filling the voids in a binderless phosphor panel of this invention.. The elastomeric polymer can be represented by the formula A-B-A (tri-block) or by the formula A-B (di-block), wherein A represents styrene and B represents the hydrogenated diene block e. g. ethylene-butylene or ethylene-propylene. Also polyurethane resins can be used as polymer in phosphor panels of this invention.

The polymers can be dissolved in any suitable solvent, e.g., lower alcohols such as methanol, ethanol, n-propanol and n-butanol; chlorinated hydrocarbons such as methylene chloride and ethylene chloride; ketones such as acetone, butanone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether; methyl glycol; and mixtures of the above-mentioned solvents.

According to the present invention invention a stimulable phosphor screen is thus provided wherein voids between said needles are partially filled with a polymeric compound selected from the group consisting of vinyl resins comprising moieties derived from esters of acrylic acid and vinyl resins comprising moieties derived from esters of methacrylic acid.

When the phosphor screen comprises a vapour deposited CsBr:Eu needle phosphor it is preferred to use polymers that do not carry hydrophilic substituents, e.g., polymers without free hydroxyl, carboxyl or sulfonic acid groups. When polyester are used it is preferred to use polyester with an acid number lower than 5 mol/g and with a hydroxyl number lower than 5 mol/g. The polymers for use in phosphor screen with a vapour deposited CsBr:Eu needle phosphor are preferably dissolved in a solvent that can easily be kept "water free". By "water free" is understood a solvent that has less than 10 % wt/wt of water. Thus a solution of vinyl resins, more specifically vinyl resins comprising moieties derived from (meth)acrylic acid and/or esters of (meth) acrylic acid in ethylacetate is a first preferred solution to bring a polymer in the voids between the needle shaped phosphor in a vapour deposited phosphor panel of this invention.

A further preferred solution to bring a polymer in the voids between the needle shaped phosphor in a vapour deposited phosphor panel of this invention is a solution of a thermoplastic rubber, this rubber is preferably a block-copolymeric KRATON-G rubbers, KRATON being a trade mark name from SHELL. KRATON-G thermoplastic rubber polymers are a unique class of rubbers designed for use without vulcanisation in a mixture of ethyl acetate and toluene. According to the present invention a stimulable phosphor screen is provided wherein voids between said needles are partially filled with a polymeric compound, being a thermoplastic rubber.

It is also possible to bring a polymer in the voids between the needle phosphors in a vapour deposited phosphor screen of this invention by applying a protective layer on top of the phosphor layer from a solution that has a viscosity so that the coating solution of the protective layer seeps into the voids between the phosphor needles. This means that in one production step the (partial) filling of the voids and the production of the protective layer proceed simultaneously. When it is desired to apply a radiation curable protective layer, then it is preferred that the viscosity of the coating solution is adapted so that, with phosphor needles having a length, L , said protective layer fills said void for at most 0.10 times L. When the voids are filled deeper with a radiation curable protective layer, then the ease of recuperation of the phosphor is compromised. It was found that by adjusting the viscosity of the protective layer so that, with phosphor needles having a length, L , said protective layer fills said void for at most 0.10 times L, a very acceptable compromise between the strength of the surface and the ease of recuperation of the phosphor could be achieved.

Although the image quality that can be obtained in computed radiography when using a stimulable phosphor panel of this invention having needle-shaped phosphor is very high, it has been found that the image quality could be enhanced when the voids between the phosphor needles further contained a colorant (dye and/or pigment) that absorbs light of the stimulating wavelength. A further improvement was realised when the voids contained a colorant absorbing the stimulating radiation together with a colorant reflecting the light emitted by the stimulable phosphor upon stimulation. When an alkali metal phosphor is used in the panel according to this invention, then the stimulating light is either red or infrared light and then the colorant is preferably a blue colorant. As the colorant, either an organic colorant or an inorganic colorant can be employed. For example, the organic colorant having a body colour ranging from blue to green which can be employed in the radiation image storage panel of the present invention includes ZAPON FAST BLUE 3G (manufactured by Hoechst AG.), ESTROL BRILL BLUE N-3RL (manufactured by Sumitomo Kagaku Co., Ltd.), SUMIACRYL BLUE F-GSL (manufactured by Sumitomo Kagaku Co., Ltd.), D & C BLUE No. 1 (manufactured by National Aniline Co., Ltd.), SPIRIT BLUE (manufactured by Hodogaya Kagaku Co., Ltd.), OIL BLUE No. 603 (manufactured by Orient Co., Ltd.), KITON BLUE A (manufactured by Ciba Geigy AG.), AIZEN CATHILON BLUE GLH (manufactured by Hodogaya Kagaku Co., Ltd.), LAKE BLUE A.F.H. (manufactured by Kyowa Sangyo Co., Ltd.), RODALIN BLUE 6GX (manufactured by Kyowa Sangyo Co., Ltd.), PRIMOCYANINE 6GX (manufactured by Inahata Sangyo Co., Ltd.), BRILLACID GREEN 6BH (manufactured by Hodogaya Kagaku Co.,

Ltd.), CYANINE BLUE BNRS (manufactured by Toyo Ink Co., Ltd.), LIONOL BLUE SL (manufactured by Toyo Ink Co., Ltd.), and the like. For example, the inorganic colorant having a body colour ranging from blue to green which can be employed in the radiation image storage panel of the present invention includes ultramarine blue, cobalt blue, cerulean blue. Other useful colorants are the blue colorants sold by BASF AG of Germany under the trade name HELIOGEN BLUE and those sold by Bayer AG of Germany under trade name MACROLEX BLUE.

The colorant, contained in the voids of a panel of the present invention, intended for reflecting the emitted light is preferably a white pigment. Very suitable white pigments are, e.g., $TiO_2$, $ZnS$, $Al_2O_3$, $MgO$, $BaSO_4$, etc. $TiO_2$ in anatase crystal form is a preferred white pigment for use in a panel of this invention.

The colorant(s) can be brought in the voids either before adding a polymeric compound, as described herein above, in the voids or together with the polymeric compound. When the colorant is brought into the voids before the polymeric compound, then the compound can be introduced into the fine gaps whose width is preferably 1-30 μm. The substance of fine particles having a diameter of several hundreds of nanometers may be introduced physically without previous processing. In case that the substance has lower melting point, it may be heated and introduced. The substance may be permeated into the gap when dissolved or dispersed in a liquid having suitable viscosity and is deposited by evaporation or modification by heating. The substance may also be introduced into the gap by a gas phase deposition method. In the latter case a suitable pigment can be a dye as used in thermal dye sublimation transfer. Typical and specific examples of dyes for use in thermal dye sublimation transfer have been described in e.g. EP-A-209 990, EP-A-209 991, EP-A-216 483, EP-A-218 397, EP-A-227 095, EP-A-227 096, EP-A-229 374, EP-A-235 939, EP-A-247 737, EP-A-257 577, EP-A-257 580, EP-A-258 856, EP-A-400 706, EP-A-279 330, EP-A-279 467, EP-A-285 665, US-A-4 743 582, US-A-4 753 922, US-A-4 753 923, US-A-4 757 046, US-A-4 769 360, US-A-4 771 035, US-A-5 026 677, JP-A-84/78 894, JP-A-84/78 895, JP-A-84/78 896, JP-A-84/227 490, JP-A-84/227 948, JP-A-85/27 594, JP-A-85/30 391, JP-A-85/229 787, JP-A-85/229 789, JP-A-85/229 790, JP-A-85/229 791, JP-A-85/229 792, JP-A-85/229 793, JP-A-85/229 795, JP-A-86/41 596, JP-A-86/268 493, JP-A-86/268 494, JP-A-86/268 495, and JP-A-86/284 489. When the colorants are not introduced by gas phase deposition in the voids between the phosphor needles, then colorants can, for application in the voids of a phosphor panel of this invention, be dissolved or dispersed in any suitable solvent. Hereinafter the term "solution(s) of a colorant" is used to include both solution and dispersions. Examples of suitable solvents are, e. g., lower alcohols such as methanol, ethanol, n-propanol and n-butanol; chlorinated hydrocarbons such as methylene chloride and ethylene chloride; ketones such as acetone, butanone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether; methyl glycol; and mixtures of the above-mentioned solvents. When the phosphor screen comprises a vapour deposited CsBr:Eu needle phosphor it is preferred to use solvents that can easily be kept water free, wherein by "water free" is understood a solvent that has less than 10 % wt/wt of water. Therefore esters of lower alcohols with lower aliphatic acids such as methyl acetate, ethyl acetate and butyl acetate and toluene are preferred solvents.

When the colorants are dispersed in the solution it is preferred that the average particle size of the colorant is adapted to the width of the voids. It is known, from e.g. US-A-4 947 046, that the voids between phosphor needles are between 0.01 and 30 $\mu$m.

In a preferred embodiment of the present invention, the polymeric solution for filling the voids further contains one or more colorants so that in one step both the elasticity of the screen and the image quality have been increased by adding simultaneously a polymer and at least one colorant in the voids.

The invention further encompasses a method for producing a binderless phosphor screen comprising the steps of :

- vapour depositing a photostimulable phosphor on a substrate forming a phosphor layer with phosphor needles and voids between them,
- applying a solution of a polymer on said vapour deposited phosphor,
- wiping the excess of said solution from said phosphor layer and
- drying the phosphor screen.

According to the said method of the present invention an additional step of applying at least one colorant in said voids is performed before said step of applying a solution of a polymer on said vapour deposited phosphor. In another embodiment according to the said method, in said step of applying a solution of a polymer on said vapour deposited phosphor, a solution of a polymer is used further comprising at least one colorant.

The invention also encompasses a method for producing a binderless phosphor screen on a substrate containing a CsX:Eu stimulable phosphor, wherein X represents a halide selected from the group consisting of Br, Cl and combinations thereof comprising the steps of :

- bringing multiple heatable containers of CsX and a Europium compound selected from the group consisting of EuX'$_2$ EuX'$_3$ and EuOX', X' being selected from the group consisting of F, Cl, Br, I and combinations thereof together with the substrate in a deposition chamber that is evacuated to at least 10$^{-1}$ mbar,
- depositing, by a method selected from the group consisting of physical vapour deposition, chemical vapour deposition or atomisation technique, both said CsX and said Europium compound on a substrate in such a ratio that on said substrate a CsX phosphor, doped with between 10$^{-3}$ and 5 mol % of Europium, is formed
- applying a solution of a polymer on said vapour deposited phosphor,
- wiping the excess of said solution from said vapour deposited phosphor and
- drying the phosphor screen.

According to the said method of the present invention an additional step of applying at least one colorant in said voids is performed before said step of applying a solution of a polymer on said vapour deposited phosphor. In another embodiment according to the said method, in said step of applying a solution of a polymer on said vapour deposited phosphor, a solution of a polymer is used further comprising at least one colorant.

The invention further encompasses a method for producing a binderless phosphor screen on a substrate containing a CsX:Eu stimulable phosphor, comprising the steps of :

- bringing a heatable container with a CsX:Eu phosphor, X being selected from the group consisting of Cl, Br and combinations thereof together with the substrate in a deposition chamber that is evacuated to at least 10$^{-1}$ mbar,
- depositing, by a method selected from the group consisting of physical vapour deposition, chemical vapour deposition or atomisation technique, said CsX:Eu phosphor forming a vapour deposited phosphor layer with needle shaped phosphor,
- applying a solution of a polymer on said vapour deposited phosphor,
- wiping the excess of said solution from said vapour deposited phosphor and
- drying the phosphor screen.

According to the said method an additional step of applying at least one colorant in said voids is performed before said step of applying a solution of a polymer on said vapour deposited phosphor. In another embodiment according to the method of the present invention, in said step of applying a solution of a polymer on said vapour deposited phosphor, a solution of a polymer is used further comprising at least one colorant.

All methods mentioned above thus beneficially comprise an additional step of providing at least one colorant to the voids before the step of applying a solution of a polymer on said vapour deposited phosphor, wherein, in a specific embodiment said additional step is a step of vapour depositing a colorant in the voids of the phosphor panel. In this additional step, the colorant can be either a colorant absorbing the stimulating radiation or a colorant reflecting the light emitted by the stimulable phosphor upon stimulation or it can be both.

In the methods above it is possible to use in the step of applying a solution of a polymer on said vapour deposited phosphor, a solution of a polymer that further contains at least one colorant. In a preferred embodiment said solution contains at least two colorants, one absorbing the stimulating radiation and one reflecting the light emitted by the stimulable phosphor upon stimulation.

Furtheron in all methods according to the present invention, it is preferred that said solution of a polymer is selected from the group consisting of a solution of vinyl resins comprising moieties derived from esters of acrylic acid in ethylacetate, a solution of vinyl resins comprising moieties derived from esters of methacrylic acid in ethylacetate and a solution of a thermoplastic rubber in a mixture of ethylacetate and toluene.

When the voids between the phosphor needles have been filled with a solution of a polymer (that is not intended to produce simultaneously a protective layer), then a protective layer may be applied to the panel. This layer can be any protective layer known in the art, it can be a radiation cured layer as disclosed in, e.g., US-A-6 120 902, and in co-pending EP-Application No. 01000695, filed December 3, 2001.

When desired or required the protective layer of the present invention may include spacing particles for further increase of the transportability and adjustment of the electrostatic properties.

Suitable spacing agents in the form of friction reducing polymer beads selected from the group consisting of solid polystyrene, solid polyalkylene and a solid organic fluorinated polymer. Preferably the spacing agents are beads incorporating fluorinated moieties. Such beads have been described in US-A-4 059 768. In the construction of the scanning apparatus used for reading storage phosphor screens the trend is towards more and more compact apparatus, so that the distance between the (moving) storage phosphor screen and mechanical (moving) parts of the scanner can become very low and can become measured in 10 µm up to 100 µm. When then a storage phosphor screen with a protective layer according to the present invention has protruding beads it is important that the beads do not touch mechanical parts of the scanner and that this is true, even when the storage panel shows some wobble during transport in the scanner. Therefore beads used as spacing particles in a storage phosphor screen of the present invention preferably have a volume median diameter, dv50, so that 5 µm ≤ dv50 ≤ 25 µm and a numeric median diameter, dn50, so that $1 \leq dv50/dn50 \leq 1.20$. Further the beads are preferably adapted to the thickness, t, of the protective layer on the storage phosphor panel of the present invention so that and said polymeric beads have a volume median diameter, dv50, according to the relationship: $1.25 \leq dv50/t \leq 4.0$.

The phosphor layer of a binderless storage phosphor screen according to the present invention can be prepared by vacuum deposition of the storage phosphor crystals on the substrate as well as by combining (mixing) the ingredients for the storage phosphor (phosphor precursors) and then evaporating this mixture in order to have the phosphor formed "in situ" during evaporation.

The storage phosphor in a binderless storage phosphor screen according to the present invention can be any storage phosphor known in the art. Preferably the storage phosphor in a binderless storage phosphor screen of this invention is an alkali metal phosphor Suitable phosphors are, e.g., phosphors according to formula I :

$$M^{1+}X.aM^{2+}X'_2.bM^{3+}X''_3:cZ$$

wherein: $M^{1+}$ is at least one member selected from the group consisting of Li, Na, K, Cs and Rb, $M^{2+}$ is at least one member selected from the group consisting of Be, Mg, Ca, Sr, Ba, Zn, Cd, Cu, Pb and Ni, $M^{3+}$ is at least one member selected from the group consisting of Sc, Y, La, Ce, Pr, Nd, Pm, Sm, Eu, Gd, Tb, Dy, Ho, Er, Tm, Yb, Lu, Al, Bi, In and Ga, Z is at least one member selected from the group $Ga^{1+}$, $Ge^{2+}$, $Sn^{2+}$, $Sb^{3+}$ and $As^{3+}$, X, X' and X'' can be the same or different and each represents a halogen atom selected from the group consisting of F, Br, Cl, I and $0 \leq a \leq 1$, $0 \leq b \leq 1$ and $0 < c \leq 0.2$. Such phosphors have been disclosed in, e.g., US-A-5 736 069.

Highly preferred storage phosphors for use in a binderless phosphor screen of the present invention are CsX:Eu stimulable phosphors, wherein X represents a halide selected from the group consisting of Br and Cl prepared by a method comprising the steps of

- mixing said CsX with between $10^{-3}$ and 5 mol % of a Europium compound selected from the group consisting of $EuX'_2$, $EuX'_3$ and EuOX', X' being a member selected from the group consisting of F, Cl, Br and I;
- firing said mixture at a temperature above 450 °C ;
- cooling said mixture and
- recovering the CsX:Eu phosphor.

## Claims

1. A binderless stimulable phosphor screen having a support and a vapour deposited phosphor layer with phosphor needles and voids between said needles, **characterised in that** said voids between said needles are partially filled with a polymeric compound.

2. A binderless stimulable phosphor screen according to claim 1, wherein, said voids are filled over a length of at least 5 μm.

3. A binderless stimulable phosphor screen according to claim 1 or 2, wherein said polymeric compound is selected from the group consisting of vinyl resins comprising moieties derived from esters of acrylic acid and vinyl resins comprising moieties derived from esters of methacrylic acid.

4. A binderless stimulable phosphor screen according to claim 1 or 2, wherein said polymeric compound is a thermoplastic rubber.

5. A method for producing a binderless phosphor screen comprising the steps of :

   - vapour depositing a photostimulable phosphor on a substrate forming a phosphor layer with phosphor needles and voids between them,
   - applying a solution of a polymer on said vapour deposited phosphor,
   - wiping the excess of said solution from said phosphor layer, and
   - drying the phosphor screen.

6. A method for producing a binderless phosphor screen on a substrate containing a CsX:Eu stimulable phosphor, comprising the steps of :

   - bringing a heatable container with a CsX:Eu phosphor, X being selected from the group consisting of Cl, Br and combinations thereof together with the substrate in a deposition chamber that is evacuated to at least $10^{-1}$ mbar,
   - depositing, by a method selected from the group consisting of physical vapour deposition, chemical vapour deposition or atomisation technique, said CsX:Eu phosphor forming a vapour deposited phosphor layer with needle shaped phosphor,
   - applying a solution of a polymer on said vapour deposited phosphor,
   - wiping the excess of said solution from said vapour deposited phosphor and
   - drying the phosphor screen.

7. A method for producing a binderless phosphor screen on a substrate containing a CsX:Eu stimulable phosphor, said method comprising the steps of :

   - bringing a heatable container with a CsX:Eu phosphor, X being selected from the group consisting of Cl, Br and combinations thereof, together with the substrate in a deposition chamber that is evacuated to at least $10^{-1}$ mbar,
   - depositing, by a method selected from the group consisting of physical vapour deposition, chemical vapour deposition or atomisation technique, said CsX:Eu phosphor forming a vapour deposited phosphor layer with needle shaped phosphor,
   - applying a solution of a polymer on said vapour deposited phosphor,
   - wiping the excess of said solution from said vapour deposited phosphor and
   - drying the phosphor screen.

8. Method according to any one of the claims 5 to 7, wherein an additional step of applying at least one colorant in said voids is performed before said step of applying a solution of a polymer on said vapour deposited phosphor.

9. Method according to any one of the claims 5 to 7, wherein, in said step of applying a solution of a polymer on said vapour deposited phosphor, a solution of a polymer is used further comprising at least one colorant.

10. Method according to any one of claims 5 to 9, wherein said solution of a polymer is selected from the group consisting of a solution of vinyl resins comprising moieties derived from esters of acrylic acid in ethylacetate, a solution of vinyl resins comprising moieties derived from esters of methacrylic acid in ethylacetate and a solution of a thermoplastic rubber in a mixture of ethylacetate and toluene.

**European Patent Office**

## EUROPEAN SEARCH REPORT

Application Number

EP 03 10 0314

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,E | EP 1 316 969 A (AGFA GEVAERT) 4 June 2003 (2003-06-04) * column 3, line 10 - column 3, line 40 * | 1,2,5-7 | G21K4/00 |
| A | EP 0 288 038 A (FUJI PHOTO FILM CO LTD) 26 October 1988 (1988-10-26) * the whole document * | 1-10 | |
| D,A | US 4 947 046 A (KAWABATA KATUICHI ET AL) 7 August 1990 (1990-08-07) * claims * | 1-10 | |
| D,A | EP 1 113 458 A (AGFA GEVAERT) 4 July 2001 (2001-07-04) * claims * | 1-10 | |

| | TECHNICAL FIELDS SEARCHED (Int.Cl.7) |
|---|---|
| | G21K |

The present search report has been drawn up for all claims

| Place of search | Date of completion of the search | Examiner |
|---|---|---|
| MUNICH | 28 July 2003 | Ludi, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**     EP 03 10 0314

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2003

| Patent document cited in search report | | Publication date | Patent family member(s) | | Publication date |
|---|---|---|---|---|---|
| EP 1316969 | A | 04-06-2003 | EP | 1316969 A1 | 04-06-2003 |
| | | | US | 2003124340 A1 | 03-07-2003 |
| EP 0288038 | A | 26-10-1988 | JP | 63262600 A | 28-10-1988 |
| | | | DE | 3868119 D1 | 12-03-1992 |
| | | | EP | 0288038 A1 | 26-10-1988 |
| | | | US | 6031236 A | 29-02-2000 |
| US 4947046 | A | 07-08-1990 | JP | 2058000 A | 27-02-1990 |
| | | | JP | 2899812 B2 | 02-06-1999 |
| EP 1113458 | A | 04-07-2001 | EP | 1158540 A1 | 28-11-2001 |
| | | | EP | 1113458 A1 | 04-07-2001 |
| | | | JP | 2001249198 A | 14-09-2001 |
| | | | US | 2003091729 A1 | 15-05-2003 |
| | | | US | 2001007352 A1 | 12-07-2001 |

For more details about this annex : see Official Journal of the European Patent Office, No. 12/82